Europäisches Patentamt

European Patent Office

Office européen des brevets

(11) Numéro de publication: **0 368 700**
**A1**

# DEMANDE DE BREVET EUROPEEN

(21) Numéro de dépôt: 89402818.2

(22) Date de dépôt: 12.10.89

(51) Int. Cl.⁵ **F16B 7/14, F16B 2/18, B62D 1/18**

(30) Priorité: 13.10.88 FR 8813486

(43) Date de publication de la demande:
16.05.90 Bulletin 90/20

(84) Etats contractants désignés:
**BE DE ES GB IT NL SE**

(71) Demandeur: ECIA - EQUIPEMENTS ET COMPOSANTS POUR L'INDUSTRIE AUTOMOBILE

F-25400 Audincourt (Doubs)(FR)

(72) Inventeur: Hoblingre, André
28 rue Vincent d'Indy
F-25700 Valentigney(FR)
Inventeur: Barnabe, Jean Pierre
17, Combes Saint Germain
D-25700 Valentigney(FR)
Inventeur: Bertrand, Jean Marie
Rue du Pont - Mathay
D-25700 Valentigney(FR)
Inventeur: Lapalu, Nicolas
1, Rue du Cercle
D-25700 Valentigney(FR)

(74) Mandataire: Moncheny, Michel et al
c/o Cabinet Lavoix 2 Place d'Estienne
d'Orves
F-75441 Paris Cedex 09(FR)

(54) **Dispositif de blocage axial d'un organe télescopique tel qu'une colonne de direction de véhicule automobile.**

(57) Ce dispositif comporte deux demi-colliers 6 et 8, dont l'un est prolongé par une patte 14 tandis que l'autre comporte une lumière 20 de passage de cette patte et est traversé par une vis réglable 26 arrêtant le déplacement de la patte. Les demi-colliers sont en outre reliés par un dispositif à genouillère comportant une biellette 30 montée pivotante sur l'un des demi-colliers et contre l'autre et un levier de commande 48 qui porte deux éléments d'articulation coopérant chacun avec un élément complémentaire, respectivement de la biellette 30 et du flanc 18 d'extrémité du second demi-collier (8).

FIG.1

## Dispositif de blocage axial d'un organe télescopique tel qu'une colonne de direction de véhicule automobile.

La présente invention concerne le blocage axial d'un organe télescopique dont les éléments interne et externe doivent à la fois pouvoir être déplacés axialement l'un par rapport à l'autre et être entraînés de manière rigoureusement solidaire lors de leur utilisation.

Il est bien connu que les organes télescopiques de ce type doivent être associés à un dispositif de blocage axial permettant, d'une part, de verrouiller rigoureusement les uns par rapport aux autres les éléments interne et externe et, d'autre part, de les libérer facilement lorsque l'on veut effectuer un réglage. Ceci est tout particulièrement le cas des colonnes de direction à réglage par déplacement axial relatif de certains de leurs éléments, qui doivent pouvoir être modifiées facilement par le conducteur du véhicule, puis bloquées de manière très sûre et quasi instantanée.

Différents types de dispositifs de blocage ont été proposés dans ce but mais ils sont généralement complexes ou exigent du conducteur un effort relativement important de sorte que le serrage dépend de la force exercée par ce dernier.

La présente invention a pour but de fournir un dispositif de blocage axial qui soit particulièrement sûr et efficace tout en n'exigeant qu'un effort relativement faible et nettement déterminé.

Cette invention a en effet pour objet un dispositif de blocage axial d'un organe télescopique, tel qu'une colonne de direction de véhicule automobile, comportant un élément extérieur déformable jusqu'à son adhérence avec un élément intérieur, qui comporte deux demi-colliers de serrage qui sont articulés entre eux à une extrémité, une biellette articulée sur un premier demi-collier et en appui sur un flanc plat dirigé tangentiellement vers l'extérieur à partir du second demi-collier, et un levier de commande qui traverse des lumières en regard du flanc plat et de la biellette et est articulé sur chacun d'eux de telle sorte que dans la position de serrage maximum des demi-colliers et de déformation de l'élément extérieur les trois axes d'articulation sont dans un même plan.

Selon une autre caractéristique de l'invention, les deux demi-colliers se prolongent au-delà de leur articulation et portent entre leur prolongement des moyens de réglage de tension.

Les positions de blocage et de déverrouillage correspondent ainsi à des positions bien déterminées du levier de commande et de la biellette, tandis que le passage de l'une à l'autre ne demande qu'un effort raisonnable qui peut en fait être fourni par n'importe quel conducteur de véhicule automobile.

La description ci-dessous de modes de réalisation donnés à titre d'exemple non-limitatif et représentés aux dessins annexés, fera d'ailleurs ressortir les avantages et caractéristiques de l'invention. Sur ces dessins.

La figure 1 est une vue en coupe transversale d'un dispositif de blocage selon l'invention en position sur un organe télescopique.

La figure 2 est une vue de dessus du dispositif de blocage de la Fig. 1.

Les figures 3 et 4 sont des vues en élévation du dispositif de la Fig.1, respectivement en position de blocage et en position de déverrouillage.

La figure 5 est une vue en coupe suivant la ligne 5-5 de la Fig.3.

La figure 6 est une vue en perspective éclatée des deux demi-colliers du dispositif de blocage.

La figure 7 est une vue en perspective du levier de commande.

La figure 8 est une vue en coupe transversale d'un dispositif de blocage selon une variante de réalisation.

La figure 9 est une vue en élévation d'une colonne de direction munie d'un dispositif de blocage selon l'invention.

La figure 10 est une vue en coupe suivant la ligne 9-9 de la Fig.9.

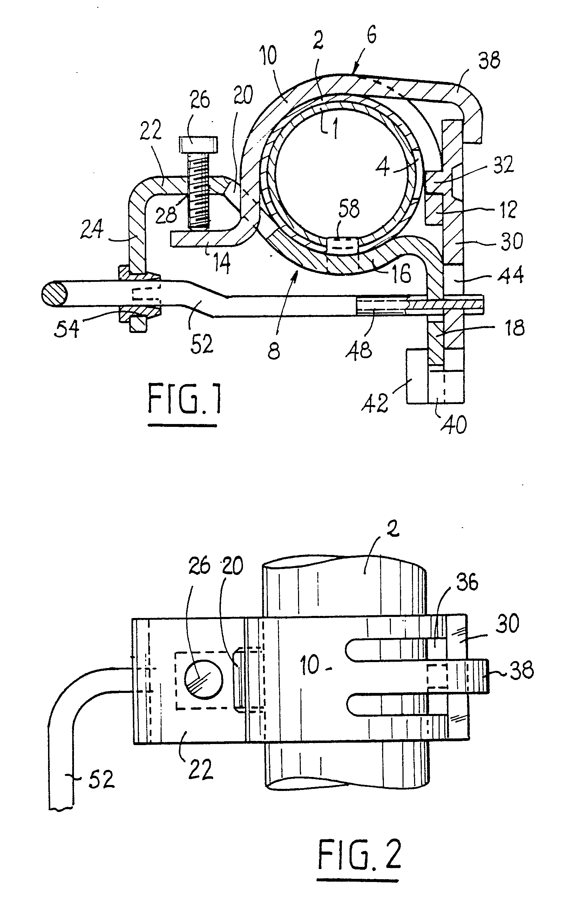

Le dispositif de blocage selon l'invention est destiné à être monté sur un organe télescopique qui comporte, comme le montre notamment la Fig.1, au moins un élément interne 1 qui est inséré dans un élément extérieur 2 susceptible d'être déformé de façon à adhérer au droit du dispositif de blocage à la surface extérieure de l'élément interne 1.

Dans les modes de réalisation représentés, les éléments interne et externe 1 et 2 sont des tubes de section circulaire et le tube externe 2 comporte au moins une fente longitudinale 4, mais il apparaîtra clairement que les éléments interne et externe peuvent avoir des formes différentes et que la déformation de l'élément extérieur 2 peut être obtenue par d'autres moyens.

Autour des tubes 1 et 2, le dispositif de blocage comporte deux demi-colliers respectivement 6 et 8 qui constituent, dans l'exempl de réalisation représenté, un demi-collier supérieur 6 et un demi-collier inférieur 8.

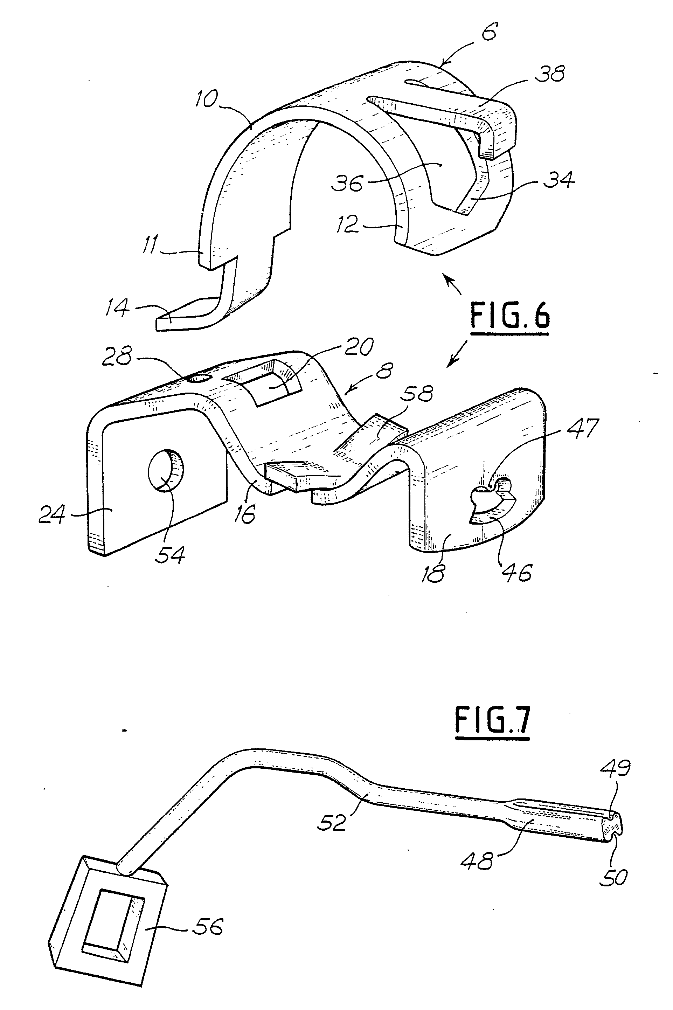

Le demi-collier supérieur 6 comporte (Fig.6) une portée incurvée 10 formant sensiblement un demi-cylindre et prolongée à chacune de ses extrémités par un flanc sensiblement plat, 11, 12 respectivement, l'un de ces flancs, 11, étant lui-même prolongé par une patte plus étroite recourbée vers l'extérieur 14. Le demi-collier inférieur 8 comporte également une portée arquée 16 qui est prolongée à l'une de ses extrémités par un flanc plan 18, mais ce dernier est dirigé vers l'extérieur de la portée 16 et du collier. A son extrémité opposée, la portée 16 est percée d'une lumière 20 qui est traversée par la patte 14 du collier supérieur 6 et dans laquelle cette dernière peut pivoter (Fig.1). Cette extrémité est également prolongée par une partie plane 22 recourbée vers l'extérieur pour constituer un second flanc 24 parallèle au flanc 18. Une vis 26 est vissée dans un trou taraudé 28 de la partie plane 22 et constitue une butée réglable contre laquelle vient appuyer la patte 14.

Lorsque les demi-colliers sont rapprochés pour former le dispositif de blocage les flancs 12 et 18 sont pratiquement dans le prolongement l'un de l'autre dans un plan tangent à la circonférence des portées 16 et 10 et sont réunis entre eux par une biellette plate 30. La biellette 30 comporte en effet, au voisinage de l'une de ses extrémités, un ergot 32 qui est en appui pivotant dans l'extrémité arrondie et rétrécie 34 d'une découpe 36 du collier supérieur 6, et à son extrémité opposée ou extrémité inférieure, une patte 40 de guidage et de retenue qui est recourbée en 42 autour du bord inférieur du flanc 18. Cette biellette 30 est en outre retenue extérieurement par un doigt coudé 38 d'une seule pièce avec le demi-collier supérieur.

La biellette 30 et le flanc 18 comportent par ailleurs chacun une lumière profilée, respectivement 44, 46, formant un élément d'articulation à rotule 45, 47 qui coopère avec un élément complémentaire formé sur un levier de commande 48. Dans le mode de réalisation représenté, les éléments d'articulation 45 et 47 sont des bossages en saillie à l'intérieur de la lumière correspondante 44, 46, qui sont dirigés en sens inverses, et le levier de commande 48 est un élément allongé comportant deux gorges longitudinales opposées 49 et 50.

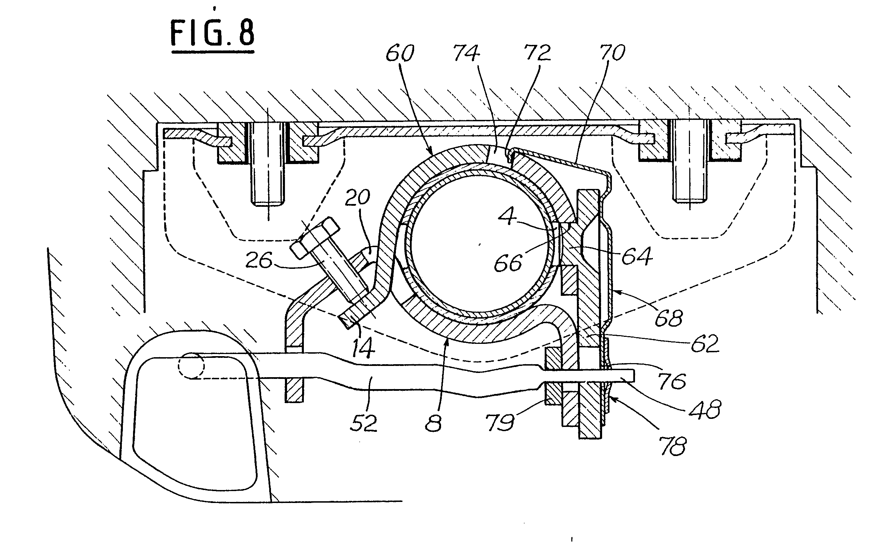

De préférence, le levier de manoeuvre 48 est prolongé par une tige de commande 52 qui traverse un orifice de guidage 54 du flanc 24 et est terminé par une poignée de manoeuvre 56 (Fig.7). Le levier de commande 48 peut ainsi facilement être basculé et pivoter autour de l'articulation 47 qui le relie au demi-collier inférieur, ce qui provoque un pivotement de la biellette 30 dans uns sens ou dans l'autre, c'est-à-dire vers une position de blocage ou vers une position de déverrouillage.

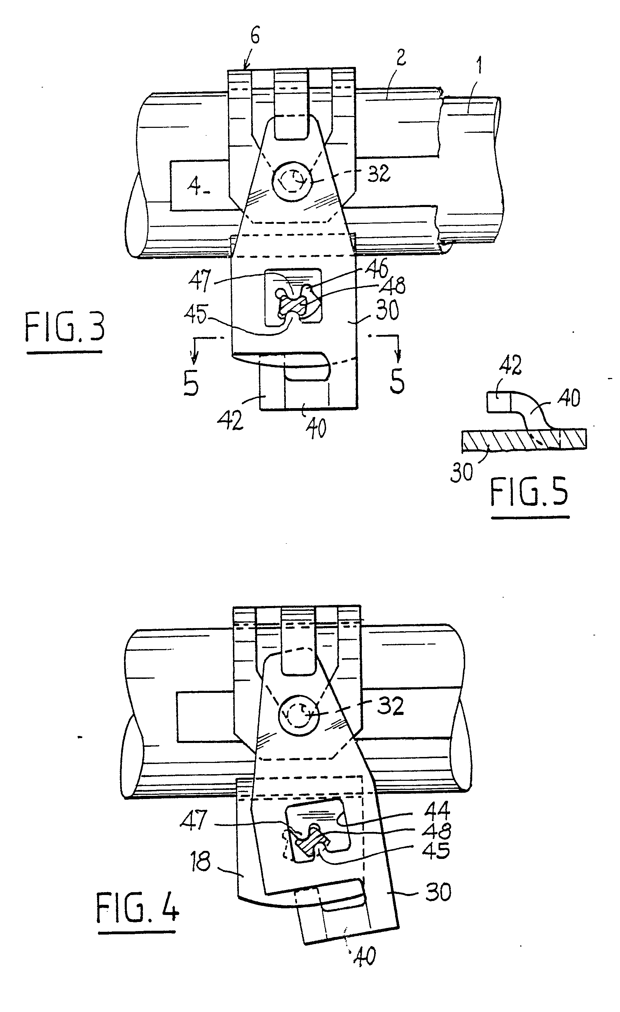

En effet, lorsque le dispositif de blocage est dans la position représentée sur les Fig.1 et 3, c'est-à-dire lorsque les axes des articulations formées par les gorges 49 et 50 et les bossages 47 et 45 sont dans le même plan que l'axe de l'ergot 32, la distance entre le bossage 47 et cet ergot 32 est minimale de sorte que les demi-colliers 6 et 8 sont rapprochés l'un de l'autre et exercent sur le tube extérieur 2 un effort de serrage maximal.

Un pivotement du levier de commande 48 autour du bossage 47 repousse le bossage 45 et la biellette 30 latéralement, vers la droite en considérant la Fig.3, et fait pivoter l'ergot 32 dans la découpe 34. La distance entre l'axe de l'ergot 32 et celui de l'articulation 45, 50 reste la même mais l'articulation 47, 49 quitte le plan des deux autres articulations et s'éloigne ainsi de l'ergot 32, ce qui permet aux flancs 18 et 12 de s'écarter l'un de l'autre et par suite aux demi-colliers 6 et 8 de desserrer leur étreinte sur l'élément extérieur 2. Dans la position de déverrouillage représentée sur la Fig.4 l'adhérence entre les éléments interne 1 et externe 2 est supprimée de sorte qu'ils peuvent être déplacés axialement l'un par rapport à l'autre. Bien entendu un simple pivotement en sens inverse du levier de commande 48 suffit pour assurer un nouveau blocage effectif et sûr lorsque la position désirée a été atteinte.

La lumière 46 du flanc 18 a de préférence sensiblement la forme d'un secteur de sorte que ses bords latéraux constituent des butées qui assurent à la course de pivotement du levier de commande 48 et de la biellette 30 des limites bien déterminées tandis que la coopération de la vis 26 et de la patte 14 permet d'assurer un réglage précis de la tension de serrage.

De préférence, notamment lorsque les éléments interne 1 et externe 2 sont constitués par des cylindres de révolution, le demi-collier inférieur 8 comporte des taquets axiaux 58, en saillie à l'intérieur de la concavité de sa portée 16, qui s'emboîtent dans des encoches de l'élément externe (2) et coopèrent avec des lumières longitudinales pratiquées en regard l'une de l'autre dans la paroi de l'élément interne 1. Les taquets 58 jouent le rôle d'organes de guidage lors du déplacement axial relatif de ces deux éléments mais surtout immobilisent ces derniers en rotation l'un par rapport à l'autre et par rapport aux demi-colliers et solidarisent le demi-collier inférieur avec le tube externe.

Selon une variante de réalisation représentée sur la Fig.8, le dispositif de blocage comporte, comme précédemment, un demi-collier supérieur 60 et un demi-collier inférieur 8 qui sont articulés entre eux à une extrémité par l'intermédiaire d'une patte 14, de prolongement du demi-collier supérieur, qui traverse une lumière 20 de l'autre demi-collier et vient buter, lors du serrage du dispositif contre une vis de réglage 26.

De l'autre côté, une biellette 62 est montée pivotante sur les deux demi-colliers grâce à un ergot 64 libre en rotation dans un orifice 66 du collier supérieur 60. Cette biellette est appliquée contre les faces extérieures des flancs plans 12 et 18 des deux demi-colliers au moyen d'une lame de ressort 68 qui est repliée à sa partie supérieure pour former un bras 70 terminé par un crochet 72 introduit dans une lumière oblongue 74 ménagée dans le demi-collier 60 sensiblement à sa partie supérieure. Le ressort 68 est par ailleurs percé d'un trou 76 permettant le libre passage du levier de commande 48. Toutefois le levier porte, d'une part, une rondelle à griffe 78 en contact avec le ressort 68, et d'autre part, une butée 79 en contact avec le flanc 18 qui coopèrent pour limiter le jeu radial entre la biellette 62 et le flanc 18 du demi-collier inférieur.

Le déplacement de déverrouillage ou de blocage s'effectue par suite de manière sûre et simple à l'aide d'un effort raisonnable mais bien déterminé.

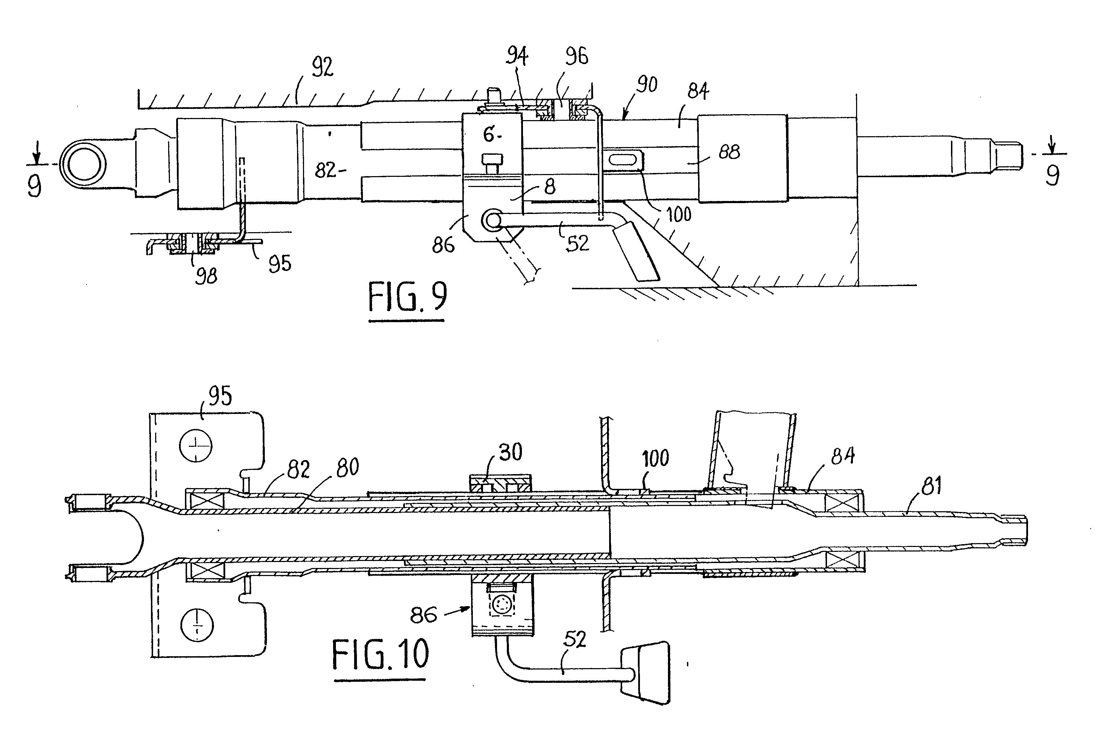

Le dispositif de blocage selon l'invention est ainsi particulièrement adapté à être utilisé lorsque l'organe télescopique est une colonne de direction de véhicule automobile dont l'arbre de direction est constitué par deux tubes 80 et 81 qui sont mobiles axialement l'un par rapport à l'autre et dont l'un est solidaire axialement d'un corps de colonne 82 tandis que l'autre est solidaire axialement d'un tube enveloppe 84. Dans le mode de réalisation représenté sur les Fig.8 et 9, le tube enveloppe 84 entoure le corps de colonne 82 et porte un dispositif de verrouillage de la colonne de direction 86.

Le tube 84 qui constitue un élément extérieur du système télescopique est fendu longitudinalement en 88 le long de deux génératrices diamétralement opposées, de sorte qu'il peut être déformé par le dispositif de blocage 86 jusqu'à son adhérence complète sur la périphérie du corps de colonne 82. L'ensemble de la colonne de direction 90 est fixé dans la carrosserie 92 du véhicule au moyen de ferrures 94, 95, d'une part en 96 au-dessus de la colonne de direction 90, et d'autre part en 98 en-dessous de cette dernière. De préférence, la ferrure 94 comporte en outre deux pattes 100 qui pénêtrent chacune dans l'une des fentes 88 du tube enveloppe 84 et assure ainsi avec ses fentes un guidage du déplacement axial du tube enveloppe.

Le faible encombrement du dispositif de blocage 86 lui permet d'être complètement à l'intérieur du volume occupé par les ferrures de support 94, 95, bien que la poignée de manoeuvre 56 soit suffisamment prés du volant pour être facilement accessible par le conducteur.

En outre cette poignée de manoeuvre est déplacée dans un plan parallèle à l'axe de la colonne pour provoquer le pivotement du levier de commande 48, ce qui est particulièrement pratique pour l'usager et n'exige qu'une place réduite.

## Revendications

1. Dispositif de blocage axial d'un organe télescopique, tel qu'une colonne de direction de véhicule automobile, comportant un élément extérieur (2) déformable jusqu'à son adhérence avec un élément intérieur (1), ce dispositif comportant deux demi-colliers de serrage (6,8) articulés l'un par rapport à l'autre à une extrémité, caractérisé en ce qu'il comporte une biellette (30) articulée sur un premier demi-collier (6) et en appui sur un flanc plat (18) dirigé tangentiellement vers l'extérieur à partir du second demi-collier (8), et un levier de commande (48) qui traverse des lumières en regard du flanc plat (18) et de la biellette (30) et est articulé sur chacun d'eux de telle sorte que dans la position de serrage maximum des demi-colliers et de déformation de l'élément extérieur (2) les trois axes d'articulation sont dans un même plan.

2. Dispositif suivant la revendication 1, caractérisé en ce que les lumières en regard de la biellette (30) et du flanc plat (18) sont profilées et forment chacune un élément d'articulation (45,47) tandis que le levier de commande (48) est un organe allongé comportant deux éléments d'articulation opposés (49,50).

3. Dispositif suivant la revendication 2, caractérisé en ce que les lumières (44 et 46) forment chacune un bossage (45,47) d'articulation coopérant avec une gorge (49,50) du levier de commande (48).

4. Dispositif suivant l'une des revendications 1 à 3, caractérisé en ce que le premier demi-collier (6) est terminé à son extrémité opposée à l'articulation par un flanc plat (12) sensiblement dans le prolongement du flanc plat (18) du second demi-collier.

5. Dispositif suivant l'une des revendications précédentes, caractérisé en ce que la lumière (46) du flanc plat (18) a la forme d'un secteur dont les bords latéraux constituent des butées de limitation du pivotement du levier de commande (48) et de la biellette (30).

6. Dispositif suivant l'une des revendications précédentes, caractérisé en ce que l'un des demi-colliers (8) comporte des taquets (58) en saillie sur sa concavité qui s'emboîtent dans des encoches de l'élément externe (2) et coopèrent avec des lumières axiales de l'élément interne (1).

7. Dispositif suivant l'une des revendications précédentes, caractérisé en ce que la biellette (30) est retenue radialement par un doigt recourbé (38) découpé dans le premier demi-collier.

8. Dispositif suivant l'une des revendications 1 à 6, caractérisé en ce que la biellette (62) est retenue extérieurement par un ressort à lame (70) accroché dans un orifice du premier demi-collier (60).

9. Dispositif suivant l'une des revendications précédentes, caractérisé en ce que les deux demi-colliers (6,8) sont prolongés au-delà de leur articulation et portent entre eux des moyens de réglage de tension (26,14).

10. Dispositif suivant la revendication 9, caractérisé en ce que les demi-colliers (6.8) comportent, l'un une lumière (20) et une vis réglable (26), et l'autre une patte recourbée (14) traversant cette lumière et en butée contre la vis de réglage.

11. Dispositif suivant l'une des revendications 1 à 10, caractérisé en ce qu'un prolongement du second demi-collier (8) forme un flanc (24) dirigé vers l'extérieur parallèle au premier flanc plat (12) et percé d'un orifice (54) de guidage d'une tige (52) d'entraînement du levier de commande (48).

12. Dispositif suivant l'une des revendications précédentes, caractérisé en ce que l'élément externe (2) est rendu déformable par la présence d'au moins une fente longitudinale (4).

FIG.1

FIG.2

FIG.3

FIG.5

FIG.4

6

38

10

36

34

12

11

14

**FIG.6**

28

20

8

58

47

24

16

46

54

18

**FIG.7**

49

52

48

50

56

FIG.8

EP 0 368 700 A1

FIG. 9

FIG. 10

EP 0 368 700 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 639 979  (POLSON) <br> * Colonne 3, ligne 22 - colonne 4, ligne 60; figures 1-3 * <br> --- | 1 | F 16 B   7/14 <br> F 16 B   2/18 // <br> B 62 D   1/18 |
| A | FR-A-2 465 111  (I.T.W.) <br> * Page 2, ligne 1 - page 3, ligne 9; figures 1,2 * <br> --- | 1 | |
| A | EP-A-0 202 959  (MACAM) <br> * Colonne 5, ligne 10 - colonne 6, ligne 8; figure 9 * <br> --- | 1 | |
| A | US-A-2 144 140  (BATCHELLER) <br> * Figure 2 * <br> --- | 9 | |
| A | EP-A-0 098 898  (HOSHINO) <br> * Revendication 1; figures 1-3 * <br> ----- | 1,12 | |

DOMAINES TECHNIQUES RECHERCHES (Int. Cl.5)

B 62 D
F 16 B

Le présent rapport a été établi pour toutes les revendications

| Lieu de la recherche | Date d'achèvement de la recherche | Examinateur |
|---|---|---|
| LA HAYE | 25-01-1990 | VAN DER WAL W |